# DEMANDE DE BREVET EUROPEEN

(11) **EP 0 587 496 A1**
(43) Date de publication de la demande: **16.03.1994**
(21) Numéro de dépôt: 93402185.8
(22) Date de dépôt: 08.09.1993
(51) Int. Cl.: G02B 6/42, G02B 6/30, G02B 6/255

(54) **Procédé de préparation du raccordement, et procédé de raccordement par épissurage d'un dispositif d'optique integrée à un câble optique, et sous-ensembles de raccordement pour la mise en oeuvre de ce procédé**

(30) Priorité: 11.09.1992 FR 9210855
(71) Demandeur: ALCATEL CABLE INTERFACE, F-08330 Vrigne aux Bois (FR)
(72) Inventeur: Brehm, Claude, F-92120 Montrouge (FR); Dupont, Philippe, F-77000 Melun (FR); Tardy, André, F-91520 Egly (FR)
(74) Mandataire: Pothet, Jean Rémy Emile Ludovic

(57) **Abrégé**

Procédé de préparation d'un sous-ensemble de raccordement d'un dispositif d'optique intégrée (21) à un câble optique, tel que :
- on utilise une multiferrule ayant des canaux internes (2) débouchant sur deux de ses faces opposées (6, 7) appelées première et deuxième faces,
- on utilise un câble optique intermédiaire,
- on introduit par la première face (6) les fibres intermédiaires (27) dans les canaux (2),
- on immobilise les fibres (27) dans les canaux (2) sur une partie de leur longueur,
- on découpe la multiferrule et les fibres immobilisées (27) pour obtenir un tronçon de multiferrule (34) dans lequel les fibres sont en partie immobilisées,
- on raccorde les fibres immobilisées (27) du tronçon (34) au dispositif (21),
- on découpe les fibres (27) à proximité de la deuxième face (7) et on les élimine de manière à laisser les canaux (2) en partie vides, pour obtenir le sous-ensemble de raccordement (36).

## Description

La présente invention concerne des procédés de préparation d'un sous-ensemble destiné au raccordement par épissurage d'un dispositif d'optique intégrée à au moins un câble à fibres optiques, ce câble étant plus particulièrement, mais non exclusivement, en forme de ruban comportant une pluralité de fibres monomodes disposées les unes parallèlement aux autres avec leurs axes dans un même plan. La présente invention concerne également un procédé de raccordement par épissurage du sous-ensemble précédent à un ou plusieurs câbles à fibres optiques, ainsi que des sous-ensembles de raccordement pour la mise en oeuvre de ce procédé.

Les câbles multifibres sont destinés à équiper de futurs réseaux optiques multiservices. Le problème de raccordement entre un ou plusieurs de ces câbles et un dispositif d'optiques intégrée comportant des guides d'ondes se pose en termes de coût, de qualité optique et de facilité opératoire.

On sait que le raccordement d'une fibre optique à un guide d'ondes implique, compte-tenu du fort confinement de l'énergie optique, des tolérances dimensionnelles de l'ordre du micromètre. Le raccordement simultané de plusieurs couples fibre-guide d'ondes accentue bien entendu la difficulté, d'autant que les objectifs économiques exigent un dispositif de connexion à bas prix de revient, utilisé par un personnel peu qualifié dans des conditions opératoires et un environnement extérieur difficiles, notamment dans les tranchées, c'est-à-dire sur chantier.

A l'heure actuelle un opérateur met en place les extrémités des fibres du câble dans des vés gravés chimiquement sur une face d'une plaquette primaire en silicium ; une plaque complémentaire permet l'immobilisation des fibres. L'alignement correct des fibres et des guides implique donc la mise en oeuvre de moyens de guidage complexes et coûteux. Les extrémités des fibres demandent une opération de polissage optique longue et délicate. L'ensemble du montage est difficile et coûteux.

La présente invention a pour but de réaliser un procédé permettant de simplifier considérablement le procédé de raccordement d'un câble à fibres optiques à un dispositif d'optique intégrée et notamment d'effectuer ce raccordement sur chantier sans avoir à réaliser l'opération longue et coûteuse de polissage optique.

La présente invention propose à cet effet un premier procédé de préparation d'un sous-ensemble destiné au raccordement par épissurage d'un dispositif d'optique intégrée à au moins un câble à fibres optiques, dit câble principal, caractérisé en ce que :
- on utilise une multiferrule en un matériau vitreux présentant une série de canaux internes à axes parallèles débouchant sur deux de ses faces opposées appelées première et deuxième faces,
- on utilise un câble à fibres optiques dit câble intermédiaire, comportant autant de fibres, dites intermédiaires, que ledit câble principal,
- on introduit, par ladite première face, les extrémités dénudées de chacune desdites fibres intermédiaires dans l'un desdits canaux de sorte que lesdites extrémités parviennent jusqu'au voisinage de ladite deuxième face,
- on immobilise lesdites fibres intermédiaires dans lesdits canaux sur une longueur inférieure à celle desdits canaux de sorte qu'une portion desdites fibres se trouvant au voisinage de ladite deuxième face n'est pas immobilisée dans lesdits canaux,
- on découpe ladite multiferrule et lesdites fibres intermédiaires transversalement auxdites fibres intermédiaires au niveau d'une section dans laquelle lesdites fibres sont immobilisées, pour obtenir un premier tronçon de multiferrule dans lequel lesdites fibres sont en partie immobilisées et comprenant ladite deuxième face, et un deuxième tronçon, qui comprend ladite première face et qui est éliminé,
- on raccorde ledit premier tronçon à l'une des faces dudit dispositif d'optique intégrée de manière à placer les extrémités desdites fibres sectionnées et affleurant à la face dudit tronçon opposée à ladite deuxième face, dans le prolongement des guides d'ondes dudit dispositif d'optique intégrée,
- on découpe lesdites fibres transversalement au niveau d'une section située à proximité de ladite deuxième face et où lesdites fibres ne sont pas immobilisées dans lesdits canaux, et l'on élimine les fibres ainsi découpées de manière à laisser lesdits canaux vides sur une partie de leur longueur, pour obtenir ainsi ledit sous-ensemble de raccordement.

Dans ce premier procédé, les guides d'ondes du dispositif d'optique intégrée sont disposés de sorte que leurs axes se trouvent dans un même plan, l'espacement entre deux guides d'ondes consécutifs dans ce plan étant le même pour tous les guides d'ondes et égal au diamètre des fibres intermédiaires non dénudées, et le diamètre des guides d'ondes étant sensiblement égal au diamètre des fibres intermédiaires dénudées.

Selon un deuxième procédé de mise en oeuvre de la présente invention pour la préparation d'un sous-ensemble destiné au raccordement par épissurage d'un dispositif d'optique intégrée à au moins un câble à fibres optiques, dit câble principal, :
- on utilise une multiferrule en un matériau vitreux présentant une série de canaux internes à axes parallèles se trouvant dans un même plan, dit plan diamétral, débouchant sur deux de ses faces opposées appelées première et deuxième faces, ladite multiferrule présentant une fente parallèle au plan desdits canaux et telle que ces derniers débouchent dans ladite fente,
- on utilise un câble à fibres optiques dit câble intermédiaire, comportant autant de fibres, dites intermédiaires, que ledit câble principal,
- on introduit, par ladite deuxième face, les extrémités dénudées de chacune desdites fibres intermédiaires dans l'un desdits canaux de sorte que lesdites extrémités parviennent jusqu'au voisinage de ladite première face,
- on exerce sur lesdites fibres intermédiaires une force orthogonale au plan des canaux pour amener leurs portions extrêmes situées à proximité de ladite première face dans ladite fente et au contact de l'un des bords de ladite fente parallèle au plan des canaux,
- on introduit par ladite première face, dans ladite fente, au moins une pièce pour rapprocher lesdites portions extrêmes les unes des autres de sorte que, au niveau d'une section voisine de ladite première face, lesdites fibres intermédiaires sont en contact les unes avec autres,
- on immobilise ladite pièce dans ladite mutiferrule et lesdites fibres intermédiaires dans lesdits canaux sur une longueur inférieure à celle desdits canaux de sorte qu'une portion desdites fibres se trouvant au voisinage de ladite deuxième face n'est pas immobilisée dans lesdits canaux,
- on découpe ladite pièce, ladite multiferrule et lesdites fibres intermédiaires transversalement auxdites fibres intermédiaires au niveau d'une section dans laquelle lesdites fibres sont immobilisées et en contact les unes avec les autres, pour obtenir un premier tronçon de multiferrule dans lequel lesdites fibres sont en partie immobilisées et comprenant ladite deuxième face, et un deuxième tronçon, qui comprend ladite première face et qui est éliminé,
- on raccorde ledit premier tronçon à l'une des faces dudit dispositif d'optique intégrée de manière à placer les extrémités desdites fibres sectionnées et affleurant à la face dudit tronçon opposée à ladite deuxième face, dans le prolongement des guides d'ondes dudit dispositif d'optique intégrée,
- on découpe lesdites fibres transversalement au niveau d'une section située à proximité de ladite deuxième face et où lesdites fibres ne sont pas immobilisées dans lesdits canaux, et l'on élimine les fibres ainsi découpées de manière à laisser lesdits canaux vides sur une partie de leur longueur, pour obtenir ainsi ledit sous-ensemble de raccordement.

On peut exercer la force précédente sur les fibres intermédiaires à l'aide d'au moins un barreau venant se loger dans une rainure orthogonale au plan des canaux et dont le fond débouche dans les canaux, cette rainure se trouvant du côté du plan des canaux opposé à celui où se trouve le bord de la fente contre lequel on doit amener les portions extrêmes des fibres intermédiaires.

Pour faciliter l'opération précédente, on peut maintenir les fibres intermédiaires à l'aide d'au moins un barreau cylindrique venant se loger dans une rainure orthogonale au plan des canaux et dont le fond débouche dans les canaux, cette rainure se trouvant du même côté du plan des canaux que celui où se trouve le bord de la fente contre lequel on doit amener les portions extrêmes des fibres intermédiaires.

On peut utiliser deux pièces introduites dans la fente de part et d'autre des fibres intermédiaires de manière à centrer ces dernières dans la fente. La ou les pièces utilisées pour le rapprochement des fibres intermédiaires peuvent avantageusement être constituées du même matériau que la multiferrule.

Dans le deuxième procédé de mise en oeuvre de l'invention, les guides d'ondes du dispositif d'optique intégrée sont disposés de sorte que leurs axes se trouvent dans un même plan, l'espacement entre deux guides d'ondes consécutifs dans ce plan étant le même pour tous les guides d'ondes et égal au diamètre des fibres intermédiaires dénudées, et le diamètre des guides d'ondes étant sensiblement égal au diamètre des fibres intermédiaires dénudées.

Selon un troisième procédé de mise en oeuvre de la présente invention pour la préparation d'un sous-ensemble destiné au raccordement par épissurage d'un dispositif d'optique intégrée à au moins deux câbles à fibres optiques, dit câbles principaux, :
- on utilise une multiferrule en un matériau vitreux présentant deux séries de canaux internes à axes parallèles situés dans deux plans parallèles et distincts, lesdits canaux débouchant sur deux faces opposées de ladite multiferrule appelées première et deuxième faces, ladite multiferrule étant en outre formée par assemblage de deux multiferrules dites primaires présentant chacune l'une desdites séries de canaux, l'une desdites multiferrules primaires étant moins longue que l'autre de sorte que ladite première face au niveau de ladite première série est en retrait par rapport à ladite première face au niveau de ladite deuxième série, les canaux de ladite deuxième série débouchant par ailleurs au voisinage de ladite première face dans une fente parallèle à leur plan, de largeur égale à la somme des diamètres de tous les canaux, et s'ouvrant vers ladite deuxième série, la portion de multiferrule se trouvant entre lesdites première et deuxième séries formant un pan incliné par rapport aux plans desdites première et deuxième séries,
- on utilise deux câbles, dits câbles intermédiaires, comportant chacun autant de fibres, dites intermédiaires, que l'un desdits câbles principaux,
- on introduit, par ladite deuxième face, les extrémités dénudées de chacune desdites fibres intermédiaires dans l'un desdits canaux de sorte que lesdites extrémités parviennent jusqu'au voisinage de ladite première face et que les fibres intermédiaires de chacun desdits câbles intermédiaires se trouvent respectivement dans les canaux de l'une et l'autre desdites séries,
- on applique à l'aide d'une pièce adaptée lesdites fibres intermédiaires de ladite première série contre ledit pan incliné pour amener leurs extrémités dans le plan desdites fibres intermédiaires de ladite deuxième série en les intercalant avec ces dernières dans ladite fente de sorte que lesdites fibres intermédiaires se trouvent toutes en contact les unes avec les autres,
- on immobilise lesdites fibres intermédiaires dans lesdits canaux sur une longueur inférieure à celle desdits canaux de sorte qu'une portion desdites fibres se trouvant au voisinage de ladite deuxième face n'est pas immobilisée dans lesdits canaux,
- on découpe ladite multiferrule, ladite pièce et lesdites fibres intermédiaires transversalement auxdites fibres intermédiaires au niveau d'une section dans laquelle lesdites fibres sont immobilisées et toutes en contact les unes avec les autres, pour obtenir un premier tronçon de multiferrule dans lequel lesdites fibres sont en partie immobilisées et comprenant ladite deuxième face, et un deuxième tronçon, qui comprend ladite première face et qui est éliminé,
- on raccorde ledit premier tronçon à l'une des faces dudit dispositif d'optique intégrée de manière à placer les extrémités desdites fibres sectionnées et affleurant à la face dudit tronçon opposée à ladite deuxième face, dans le prolongement des guides d'ondes dudit dispositif d'optique intégrée,
- on découpe lesdites fibres transversalement au niveau d'une section située à proximité de ladite deuxième face et où lesdites fibres ne sont pas immobilisées dans lesdits canaux, et l'on élimine les fibres ainsi découpées de manière à laisser lesdits canaux desdites première et deuxième séries vides jusqu'à une partie centrale de ladite multiferrule, pour obtenir ainsi ledit sous-ensemble de raccordement.

Dans ce troisième procédé, les guides d'ondes du dispositif d'optique intégrée sont en nombre égal à celui des fibres intermédiaires des deux câbles intermédiaires et sont disposés de sorte que leurs axes se trouvent dans un même plan, l'espacement entre deux guides d'ondes consécutifs dans ce plan étant le même pour tous les guides d'ondes et égal au diamètre des fibres intermédiaires dénudées, et le diamètre des guides d'ondes étant sensiblement égal au diamètre des fibres intermédiaires dénudées.

Quel que soit le procédé utilisé, le dispositif d'optique intégrée peut être raccordé au niveau de son autre face sur laquelle débouchent les guides d'ondes à un ou plusieurs autres câbles à fibres optiques intermédiaires selon un procédé identique à celui utilisé pour le raccordement du ou des premiers câbles à fibres optiques intermédiaires au dispositif d'optique intégrée, et le sous-ensemble comporte alors le dispositif d'optique intégrée raccordé de part et d'autre à des câbles intermédiaires au moyen de deux multiferrules.

Le procédé selon l'invention de raccordement d'un sous-ensemble selon l'un des modes de mise en oeuvre précédents à au moins un câble à fibres optiques dit câble principal, comprend les opérations suivantes :
- on introduit, par ladite deuxième face dudit sous-ensemble, les extrémités dénudées de chacune desdites fibres, dites principales, dudit câble principal dans l'un desdits canaux de sorte que lesdites extrémités parviennent jusqu'aux dites fibres intermédiaires,
- on immobilise lesdites fibres principales dans lesdits canaux,
- on découpe ladite multiferrule et lesdites fibres principales d'une part, et ladite multiferrule et lesdites fibres intermédiaires d'autre part, transversalement auxdites fibres au niveau de deux sections dans lesquelles lesdites fibres sont immobilisées pour obtenir deux tronçons de multiferrule solidarisés respectivement audit câble principal et audit dispositif d'optique intégrée, et un tronçon intermédiaire qui est éliminé,
- on aligne lesdits deux tronçons de multiferrule dans un corps d'épissure par guidage de faces de référence extérieures desdits tronçons, et, avant de réaliser le contact, on injecte dans ledit corps un gel servant à l'adaptation des indices de réfraction au niveau des interfaces desdites fibres.

Ce procédé fait ainsi intervenir deux tronçons de multiferrule extraits d'une même multiferrule de base et situés initialement dans des zones très voisines de cette dernière, distantes par exemple d'une dizaine de millimètres. Par conséquent ces deux tronçons ont intrinsèquement les mêmes caractéristiques géométriques au niveau de leurs canaux internes et de leurs faces externes de référence ; les écarts éventuels se trouvent à l'intérieur de tolérances permettant d'assurer un très bon couplage optique.

On peut utiliser, pour immobiliser les fibres intermédiaires ou principales dans la multiferrule, une colle polymérisable aux ultra-violets introduite dans les canaux préalablement à l'introduction des fibres.

Avantageusement, la découpe de la multiferrule en tronçons est facilitée par des amorces de rupture prévues transversalement aux canaux.

On peut ainsi prévoir des rainures, dites de découpe, parallèles entre elles, orthogonales au plan des canaux, et débouchant dans les canaux pour la découpe des tronçons.

On peut prévoir en outre, au droit des rainures de découpe et sur la face opposée de la multiferrule, des rainures supplémentaires pour créer des amorces de rupture.

Ces rainures supplémentaires peuvent avoir la forme d'un vé dissymétrique.

Avantageusement, la deuxième face du sous-ensemble présente une surface d'appui pour les gaines en matériau isolant des câbles principaux.

Les extrémités des canaux peuvent être munies d'un chanfrein facilitant l'introduction des fibres.

Pour couper les fibres intermédiaires avant de les éliminer afin de laisser les canaux vides jusqu'à une partie centrale de la multiferrule, on pratique dans cette dernière au droit de la section de découpe une gorge orthogonale au plan des canaux et débouchant dans les canaux.

Selon un perfectionnement possible, pour découper au niveau d'une même section la multiferrule et les fibres, on commence par découper les fibres en leur appliquant une courbure, puis une fois les fibres coupées, on coupe la multiferrule.

D'autres caractéristiques et avantages de la présente invention apparaîtront dans la description suivante de plusieurs modes de réalisation donnés à titre illustratif et nullement limitatif.

Dans les figures suivantes :
- la figure 1 est une vue schématique en élévation d'une multiferrule entrant dans un premier mode de mise en oeuvre du procédé selon l'invention,
- la figure 2 est une vue en coupe selon la ligne II-II de la figure 1,
- la figure 3 est une vue de côté de la multiferrule de la figure 1,
- la figure 4 est une coupe tranversale d'un dispositif d'optique intégrée entrant dans le premier mode de mise en oeuvre de l'invention,
- la figure 5 montre la phase d'immobilisation des fibres intermédiaires dans la multiferrule de la figure 1, et de découpe et d'élimination d'une partie de ces fibres intermédiaires,
- la figure 6 montre la phase de découpe de la multiferrule de la figure 1,
- la figure 7 montre la multiferrule de la figure 1 raccordée au dispositif d'optique intégrée de la figure 4, pour constituer un sous-ensemble de raccordement,
- la figure 8 montre la phase d'introduction et d'immobilisation des fibres principales dans le sous-ensemble de raccordement de la figure 7,
- la figure 9 montre la phase de découpe du sous-ensemble de raccordement de la figure 7,
- la figure 10 montre les deux tronçons de multiferrule liés d'une part au câble principal et d'autre part au dispositif d'optique intégrée et séparés du tronçon intermédiaire,
- la figure 11 montre les deux tronçons de la figure 10 réunis dans un corps d'épissure,
- la figure 12 est une vue de côté du corps de la figure 11,
- la figure 13 est une vue schématique en élévation d'une multiferrule entrant dans un deuxième mode de mise en oeuvre du procédé selon l'invention,
- la figure 14 est une vue de côté de la multiferrule de la figure 13,
- la figure 15 est une coupe transversale d'un dispositif d'optique intégrée entrant dans le deuxième mode de mise en oeuvre de l'invention,
- la figure 16 montre la multiferrule de la figure 14 après introduction des fibres intermédiaires et amenée de leurs portions extrêmes contre le bord supérieur de la fente et avec la pièce servant au rapprochement de ces parties extrêmes insérée dans la fente,
- la figure 17 est une vue de côté dans la direction XVIII de la figure 16 et avant introduction de la pièce de rapprochement,
- la figure 18 représente la même vue que la figure 17 dans laquelle on voit la pièce de rapprochement,
- la figure 19 est une vue schématique en élévation d'une multiferrule entrant dans un troisième mode de mise en oeuvre du procédé selon l'invention,
- la figure 20 est une coupe selon la ligne XX-XX de la figure 19,
- la figure 21 est une coupe transversale d'un dispositif d'optique intégrée entrant dans le troisième mode de mise en oeuvre de l'invention,
- la figure 22 montre la multiferrule de la figure 19 après introduction des fibres intermédiaires et munie d'une pièce servant à amener les fibres du niveau supérieur dans le plan des fibres du niveau inférieur,
- la figure 23 est une coupe selon la ligne XXII-XXII de la figure 22,
- la figure 24 est une vue schématique du sous-ensemble de raccordement utilisant la multiferrule de la figure 19,
- la figure 25 représente un perfectionnement possible pour une multiferrule entrant dans l'un des modes de mise en oeuvre de l'invention,
- la figure 26 montre le perfectionnement de la figure 25 durant la phase de découpe des fibres optiques.

Dans toutes ces figures, les éléments communs portent les mêmes numéros de référence.

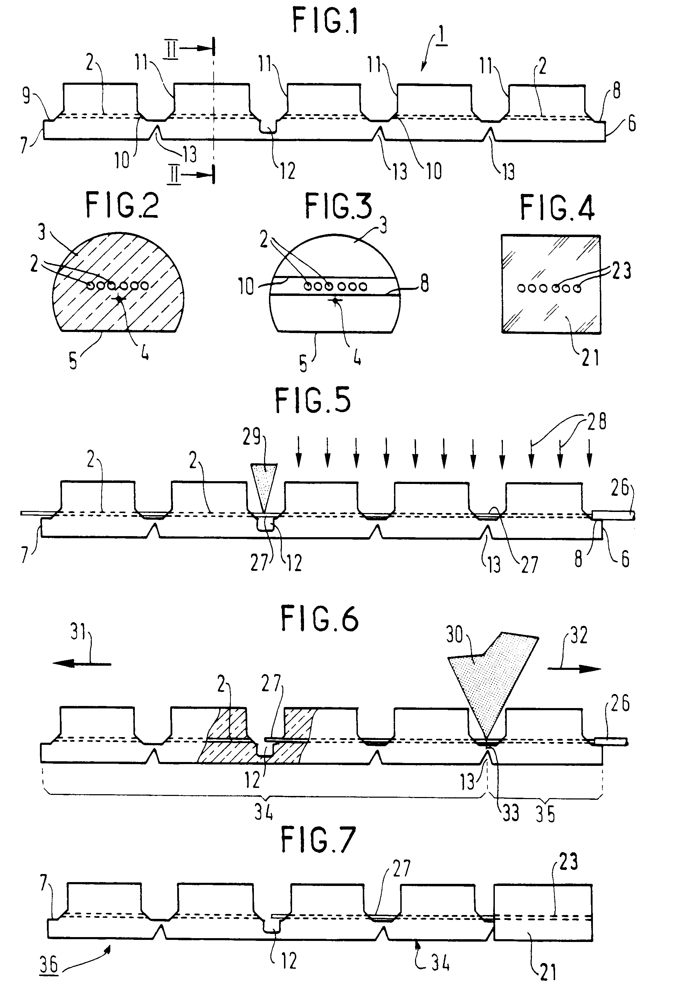

On voit dans les figures 1 à 3 une multiferrule 1 en verre de silice, ou tout autre matériau vitreux, comportant intérieurement une série de canaux capillaires 2 à axes parallèles situés (dans cet exemple) dans un même plan.

Une telle multiferrule a fait l'objet de la demande de brevet européen EP-A-0 484 850.

Extérieurement elle présente une face 3 appartenant à un cylindre d'axe 4 et de diamètre 3mm, et une face plane 5 de largeur voisine de 2,5mm. Les faces 3 et 5 sont appelées faces de référence. La longueur de la multiferrule est de 50mm.

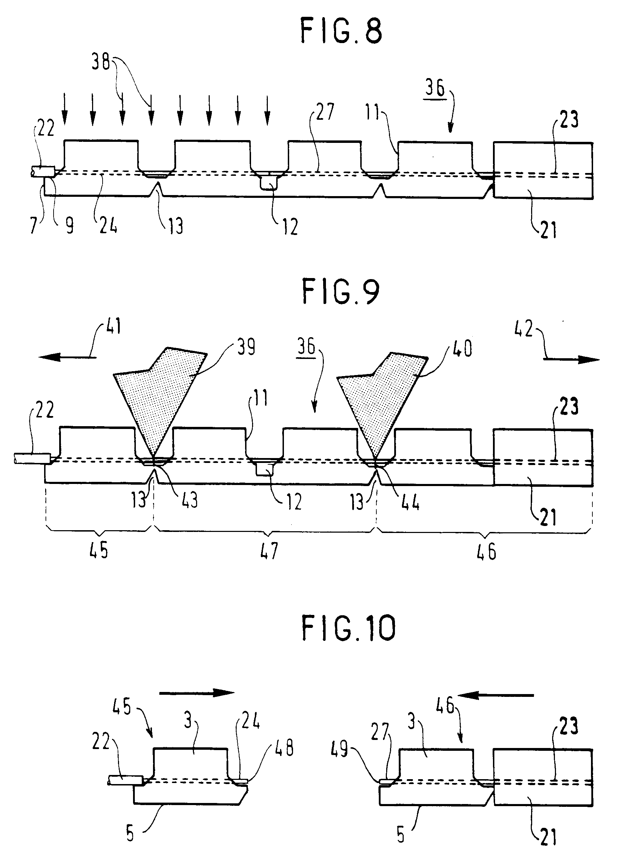

Le plan des canaux 2 est voisin du plan diamétral du cylindre d'axe 4, et parallèle à la face 5. On peut envisager six canaux 2 équidistants, avec un espacement de 250 µm (l'espacement est la distance entre les axes de deux canaux consécutifs), correspondant au nombre de guides d'ondes 23 et de fibres 24 et à leur espacement respectivement dans le dispositif d'optique intégrée 21 (voir figures 4 et 6) et le câble 22, dit câble principal (voir figure 7) à raccorder.

De manière classique, le câble 22 comporte six fibres optiques gainées 24 ayant un diamètre sur gaine de 250 µm et un diamètre sans gaine de 125 µm. Le diamère des guides d'ondes 23 est égal à 125 µm.

Les faces d'extrémité 6 et 7 de la multiferrule 1 sont usinées de manière à présenter une surface d'appui 8, 9 pour les câbles à raccorder. Les surfaces 8 et 9 se trouvent à 125 µm (avec une tolérance -0, +25 µm) du plan diamétral des canaux 2. Par ailleurs, les entrées des canaux 2 sont munies de chanfreins 10 pour faciliter l'introduction des fibres. On prévoit également à cet effet un pan oblique usiné (non référencé) à l'entrée des canaux 2.

En outre, la multiferrule 1 présente plusieurs usinages transversaux destinés à constituer des amorces de rupture pour faciliter son tronçonnage ultérieur.

Ainsi, on réalise quatre rainures dites de découpe 11 de largeur égale à 2mm, distantes d'axe à axe de 8mm, orthogonales au plan des canaux 2 et dont le fond débouche dans les canaux 2. L'une des rainures 11 communique avec une gorge 12 également orthogonale au plan des canaux 2 et débouchant dans les canaux 2. La gorge 12 se trouve du côté du plan diamétral des canaux 2 opposé à celui où se trouvent les rainures 11.

Les chanfreins 10 sont de préférence ménagés au fond des rainures, toujours pour faciliter le passage des fibres dans leurs canaux.

Vis-à-vis de la cote nominale, qui serait celle du plan diamétral des canaux 2, une tolérance de ± 25 µm sur la hauteur des rainures 11 serait acceptable. Au droit des rainures 11 (à l'exception de celle qui communique avec la gorge 12) sont usinées dans la face 5 des rainures supplémentaires en forme de vés dissymétriques 13.

On peut introduire dans les canaux 2 de la multiferrule 1 qui vient d'être décrite, entre sa face 6 et sa gorge 12, une colle de faible viscosité, polymérisable sous l'action d'un rayonnement ultraviolet, et conditionner le composant ainsi réalisé dans un tube plastique opaque, pour le conserver jusqu'à une utilisation ultérieure. Grâce à la nature du matériau de la multiferrule, le verre de silice, dont le coefficient de dilatation est très faible, la stabilité dimensionnelle du composant est garantie.

Les procédés, selon l'invention, de préparation du sous-ensemble de raccordement et d'épissurage pour le raccordement de ce sous-ensemble à un câble à fibres optiques, vont être décrits ci-dessous dans leurs différentes phases, pour le raccordement du dispositif d'optique intégrée 21 dont un seul guide d'ondes 23 est visible en figure 7 au câble ruban 22 dont une seule fibre 24 est visible dans la figure 8.

Pour la préparation d'un sous-ensemble de raccordement de l'une des faces du dispositif d'optique intégrée 21 au câble 22, on utilise la multiferrule 1 ainsi qu'un câble intermédiaire 26, identique au câble 22 et visible en figure 5. Le câble 26 subit tout d'abord une opération de dénudage, consistant à enlever les revêtements plastiques de protection de ses fibres 27 (une seule fibre 27 est visible est visible en figure 5) sur une longueur donnée, avec une large tolérance sur cette longueur, de l'ordre de ± 1 mm. Aucune condition n'est imposée pour la qualité des extrémités des fibres 27 : des ébréchures sont même tolérables.

Les fibres 27 ainsi dénudées sont introduites collectivement par la face 6 dans les canaux 2 de la multiferrule 1 où se trouve la colle polymérisable aux ultra-violets. Cette opération est effectuée commodément d'une part grâce à la concordance entre l'espacement des fibres du câble 26 et celui des canaux 2, et d'autre part grâce à la présence des chanfreins 10.

L'introduction des fibres 27 est effectuée jusqu'à ce que le revêtement plastique du câble 26 repose sur la surface 8, la longueur dénudée des fibres 27 étant telle qu'elles soient engagées pratiquement dans toute la multiferrule 1, au moins au-delà de la gorge 12 et de préférence de manière à dépasser au-delà de la face 7 de la multiferrule 1. Un apport de colle sur la surface 8 permet de solidariser le câble 26 à la multiferrule 1, tandis qu'une illumination par rayonnement UV (schématisée par les flèches 28) assure l'immobilisation des fibres 27 dans les canaux 2 jusqu'au niveau de la gorge 12. Au-delà de cette dernière, c'est-à-dire au voisinage de la face 7 de la multiferrule 1, les fibres 27 ne sont pas immobilisées dans les canaux 2.

On vient alors découper les fibres 27 transversalement au niveau de la gorge 12 à l'aide d'un couteau à fil diamanté 29, et l'on retire les portions de fibres découpées et non immobilisées, de sorte que les canaux 2 sont vides depuis la deuxième face 7 et jusqu'à une partie de la multiferrule 1 où se trouve la gorge 12. Ici encore, aucune condition n'est imposée pour la qualité des extrémités des fibres 27.

Ensuite, la multiferrule 1 munie du câble 26 est immobilisée dans un outillage (non représenté). On met alors en oeuvre (voir figure 6) un couteau à fil diamanté 30, d'extrémité prismatique (avec un angle de 60° par exemple) pour rayer les surfaces des fibres 27 au niveau de l'une des rainures 11 où elles se trouvent immobilisées et créer des amorces de rupture 33. Cette découpe a lieu de préférence de manière à conserver une rainure 11 entre la gorge 12 et l'amorce de rupture 33.

Le couteau 30 est par exemple suspendu verticalement avec un rappel par ressort, et mobiles transversalement.

Des moyens de traction latérale schématisés par les flèches 31 et 32 sollicitent la multiferrule 1 pour initier la rupture au niveau de la zone rayée 33, associée à l'un des vés 13.

On obtient après rupture deux tronçons de multiferrule 34 et 35, le tronçon 35 étant lié au câble 26. Les fibres 27 affleurant à l'extrémité sectionnée (opposée à la face 7) du tronçon 34 ont leurs faces extrêmes présentant la qualité optique requise pour le couplage optique.

On procède alors au raccordement du dispositif d'optique intégrée 21 au tronçon 34, de manière à placer les extrémités des fibres 27 dans le prolongement des guides d'ondes 23. Cette opération, comme toutes les précédentes, est effectuée en usine, et le couplage entre le dispositif d'optique intégrée 21 et les fibres 27 est réglé en optimisant le flux de lumière transmis par chaque ensemble fibre-guide d'ondes de manière à obtenir un coefficient d'atténuation minimal pour chaque liaison.

On a ainsi réalisé, en usine, un sous-ensemble de raccordement 36 (voir figure 7) prêt à être utilisé de manière simple et rapide sur un chantier pour effectuer le raccordement du dispositif d'optique intégrée 21 à un câble à fibres optiques 22 (voir figure 8).

Bien entendu, le sous-ensemble de raccordement 36 peut permettre le raccordement du dispositif d'optique intégrée 21 à deux câbles à fibres optiques reliés respectivement à chacune des extrémités de ses guides d'ondes 23. Dans ce cas, toutes les opérations décrites précédemment sont effectuées pour raccorder un autre câble intermédiaire au dispositif 21, de manière à obtenir un sous-ensemble de raccordement ayant une disposition symétrique par rapport au dispositif 21.

La préparation d'un sous-ensemble de raccordement selon la méthode précédente peut être effectuée sans problème en usine. Elle facilite, comme on va le voir à présent, le raccordement d'un câble optique à un dispositif d'optique intégrée sur le chantier, c'est-à-dire dans des conditions extérieures difficiles où les opérations délicates telles que celle effectuées pour préparer le sous-ensemble de raccordement ne peuvent être réalisées rapidement et simplement par un personnel peu qualifié.

Pour raccorder le dispositif d'optique intégrée 21 au câble 22 (et de même pour raccorder le dispositif 21 à un autre câble situé à son autre extrémité), on commence par dénuder le câble 22, sur une longueur donnée, avec une tolérance sur cette longueur de ± 1 mm. De même que pour les extrémités des fibres 27 du câble intermédiaire 26, aucune condition n'est imposée pour la qualité des extrémités des fibres 24.

Les extrémités des fibres 24 ainsi préparées sont introduites collectivement par la face 7 du sous-ensemble 36 dans les canaux 2, où se trouve une colle polymérisable aux ultra-violets. De même que précédemment, cette colle, de faible viscosité, peut être introduite après réalisation du sous-ensemble de raccordement 36, et ce dernier peut être conditionné dans un tube plastique opaque pour être conservé après sa fabrication en usine et jusqu'à son utilisation sur un chantier par exemple.

L'introduction des fibres 24 est effectuée jusqu'à ce que le revêtement plastique du câble 22 repose sur la surface 9, la longueur dénudée des fibres 24 étant telle qu'elles soient engagées dans le sous-ensemble 36 jusqu'à venir au niveau de la gorge 12 où se trouvent les extrémités des fibres 27. Un apport de colle sur la surface 9 permet de solidariser le câble 22 à la multiferrule 1, tandis qu'une illumination par rayonnement UV (schématisée par les flèches 38) assure l'adhérence des fibres 24 dans les canaux 2.

Le sous-ensemble 36 ainsi muni du câble 22 est immobilisé dans un outillage semblable à celui utilisé précédemment pour l'immobilisation du tronçon 34. On met alors en oeuvre deux couteaux à fil diamanté 39 et 40 (voir figure 9) du même type que le couteau 30 pour rayer les surfaces des fibres 24 et 27 au niveau de deux rainures 11 situées de part et d'autre de la gorge 12 (c'est pour cette raison que l'on a conservé une rainure 11 entre l'amorce 33 et la gorge 12 lors de la découpe par le couteau 30), et créer des amorces de rupture 43 et 44.

Ici encore, et comme cela apparaît en figure 9, des moyens de traction latérale schématisés par les flèches 41 et 42 sollicitent le sous-ensemble 36 pour initier la rupture au niveau des zones rayées 43 et 44 situées au droit de vés 13.

On obtient après rupture deux tronçons de multiferrule 45 et 46 liés respectivement au câble 22 et au dispositif 21, et un tronçon intermédiaire 47 qui est éliminé. Les fibres 24 et 27 ont leurs faces extrêmes 48 et 49 respectivement (voir figure 10) présentant la qualité optique requise pour le couplage optique.

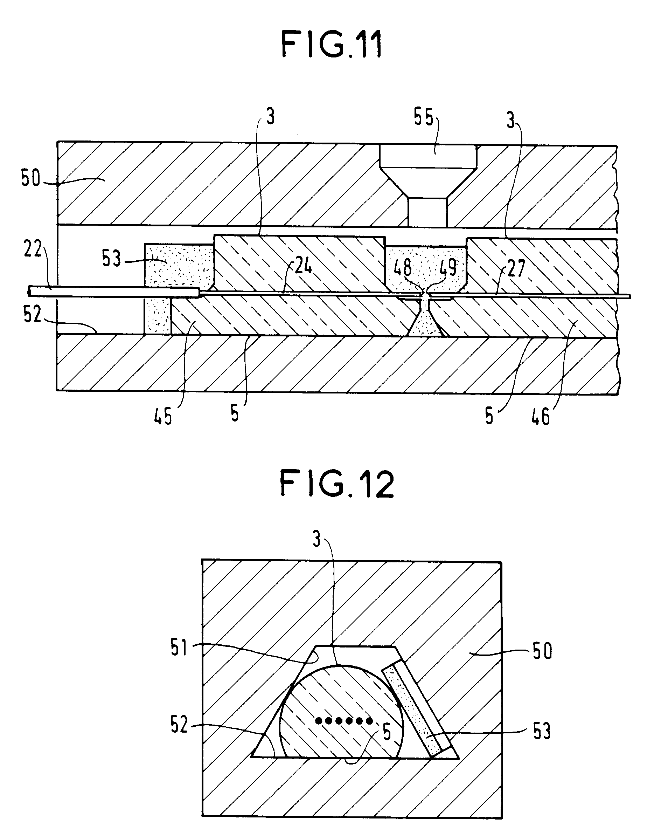

Selon l'invention, les deux tronçons 45 et 46 ont des faces externes de référence 3 et 5 extraites de zones très voisines de la même multiferrule de base 1. Or on sait réaliser, sur des distances longitudinales de quelques centimètres, des multiferrules dont les dimensions externes et le parallélisme entre les axes des canaux 2 et l'axe 4 sont suffisamment invariants pour que l'on puisse réaliser un alignement optique satisfaisant, conformément aux schémas des figures 11 et 12 :
- les tolérances sur le diamètre des canaux 2 sont : 0, +1µm
- la dispersion des positions des axes des canaux 12, vis-à-vis du meilleur plan passant au plus près de chaque axe, doit être inférieure à 10 µm,
- la dispersion des espacements entre les axes des canaux 2, dans la direction du meilleur plan précédent, est inférieure à 10 µm.

On voit dans les schémas des figures 11 et 12 un corps d'épissurage 50 qui assure l'alignement et la fixation mécanique des deux tronçons 45 et 46. Les faces de référence 3 et 5 sont appliquées contre des faces 51 et 52 du corps d'épissure grâce à un ressort 53 (voir figure 12), du type lame à déformation élastique. Avant le contact des tronçons 45 et 46, on injecte par l'orifice 55 un gel servant à l'adaptation des indices de réfraction au niveau des interfaces 48 et 49.

Bien évidemment, si l'on souhaite raccorder un câble à fibres optiques à l'autre extrémité des guides d'ondes 23 du dispositif d'optique intégrée 21, il suffit de procéder aux mêmes opérations que précédemment au niveau d'une deuxième moitié du sous-ensemble de raccordement située de l'autre côté du dispositif 21.

Le procédé de préparation d'un sous-ensemble de raccordement selon l'invention permet de réaliser en usine les opérations délicates, c'est-à-dire le raccordement du dispositif d'optique intégrée à un câble intermédiaire. Grâce à la méthode employée, un polissage optique long et coûteux n'est pas nécessaire. La qualité optique requise est obtenue par découpe très précise des extrémités des fibres, cette découpe étant facilitée par l'immobilisation des fibres dans une multiferrule.

D'autre part, le procédé de raccordement sur chantier d'un câble optique au sous-ensemble ainsi préparé ne demande aucune opération délicate, et est donc simple et aisée à mettre en oeuvre par un personnel peu qualifié dans des conditions opératoires difficiles. Le coût du raccordement est donc diminué, la qualité optique aussi bonne que dans les procédés de l'art antérieur, et la facilité opératoire accrue.

L'utilisation, selon l'invention, d'un câble intermédiaire faisant la liaison entre le câble principal et le dispositif d'optique intégrée à raccorder, permet de résoudre les problèmes posés.

On va maintenant s'attacher à décrire un deuxième mode de mise en oeuvre du procédé de préparation d'un sous-ensemble de raccordement, ce sous-ensemble étant destiné au raccordement entre le câble 22 comportant toujours six fibres optiques gainées 24, et un dispositif d'optique intégrée comportant six guides d'ondes 23' (voir figure 15), de diamètre toujours égal à 125 µm, et équidistants avec un espacement de 125 µm.

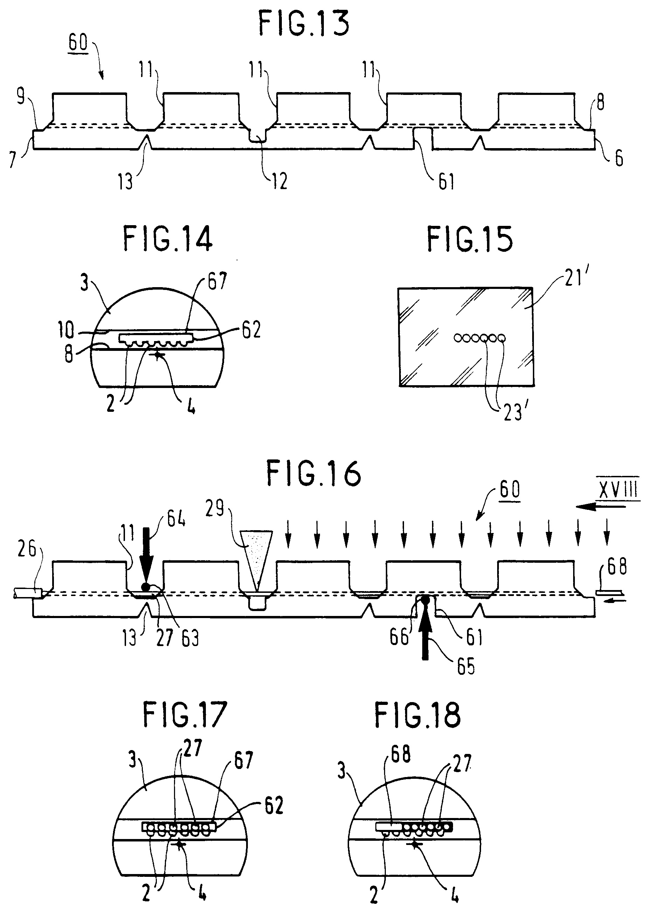

On voit en figure 13 une multiferrule 60 identique à la multiferrule 1 à l'exception de deux caractéristiques :
- elle présente une rainure 61 orthogonale au plan des canaux 2 et dont le fond débouche dans les canaux 2, située entre deux des rainures 11, de préférence au voisinage de la face 6 de la multiferrule 60, et se trouvant par rapport aux rainures 11 du côté opposé du plan diamétral des canaux 2, c'est-à-dire du même côté que la gorge 12,
- elle est traversée de part en part dans le sens longitudinal par une fente 62 (voir figure 14) parallèle au plan des canaux 2 et dont l'un des bords se trouve dans ce plan ; les canaux 2 débouchent tous dans la fente 62 qui est en partie située au-dessus de leur plan, c'est-à-dire du même côté que les rainures 11.

La réalisation de la multiferrule 60 est aisée à l'aide du procédé décrit dans la demande de brevet EP-A-0 484 850 : il suffit de réaliser deux pré-ébauches, l'une présentant des gorges semi-circulaires, et l'autre présentant une gorge de section rectangulaire destinée à venir en regard des gorges semi-circulaires lorsque les deux pré-ébauches sont rassemblées.

La fente 62 a une largeur dans le plan des canaux 2 au moins égale à 11x125 µm, soit 1,375 mm (on rappelle que les canaux 2 ont un diamètre de 125 µm et que les axes de deux canaux sont espacés les uns des autres de 250 µm).

Le procédé de préparation du sous-ensemble de raccordement selon le deuxième mode de mise en oeuvre de l'invention va être décrit ci-dessous dans ses opérations qui diffèrent de celles du procédé de préparation du sous-ensemble de raccordement 36 du premier mode de mise en oeuvre de l'invention.

Après introduction des fibres intermédiaires 27 dans les canaux 2 par la face 7, et avant leur immobilisation dans ces derniers, on exerce sur les fibres 27 une force de pression (schématisée par une flèche 64 en figure 16) orthogonale au plan diamétral des canaux 2 à l'aide d'un barreau 63 installé dans l'une des rainures 11, de préférence située entre la gorge 12 et la face 7 de la multiferrule 60. Le barreau 63 est directement en contact avec les fibres 27. La force 64 a pour effet de maintenir les fibres 27 immobiles dans les canaux 2.

D'autre part, on exerce sur les fibres 27, au niveau de la rainure 61, une force de pression (schématisée par la flèche 65 en figure 16) orthogonale au plan des canaux 2 à l'aide d'un barreau 66 installé dans la rainure 61 et venant directement en contact avec les fibres 27. La force 65 a pour effet d'amener l'ensemble des fibres 27 dans la fente 62, en contact avec le bord supérieur 67 de cette dernière (voir figure 17).

Une fois les fibres 27 amenées dans la fente 62, on introduit dans cette dernière par la face 6 de la multiferrule 60 une pièce parallélépipédique 68 (voir figures 16 et 18) en verre de silice ayant pour effet de rapprocher les unes des autres les portions extrêmes des fibres 27 situées à proximité de la face 6. La largeur dans le plan des canaux 2 de la pièce 68 est telle que les fibres 27 sont en contact les unes avec les autres sur une portion de leur longueur égale à la longueur de la pièce 68. L'espacement entre les fibres 27 sur cette portion est donc égal à celui des guides d'ondes 23' dans le dispositif d'optique intégrée 21'.

Une fois ces opérations réalisées, on immobilise le câble 26, les fibres 27 et la pièce 68 dans la multiferrule 60 entre la gorge 12 et la face 6.

L'opération de découpe qui suit est effectuée de préférence au niveau de la rainure 11 qui se trouve entre la rainure 61 et la face 6 de la multiferrule 60, de sorte que l'on sectionne à la fois la multiferrule 60, les fibres 27 et la pièce 68 et que l'on conserve une rainure 11 entre la gorge 12 et l'extrémité sectionnée. Ainsi, les extrémités des fibres 27 sectionnées ont une disposition identique à celle des guides d'ondes 23' ; l'opération de raccordement des fibres 27 avec le dispositif d'optique intégrée 21' ne pose plus alors aucun problème.

On peut alors découper les fibres 27 transversalement au niveau de la gorge 12 à l'aide du couteau 29, et retirer les portions de fibres découpées et non immobilisées.

On obtient finalement un sous-ensemble de raccordement que l'on pourra ensuite utiliser dans un procédé de raccordement au câble optique principal 22 exactement de la même manière que celle décrite en relation avec les figures 8 à 12.

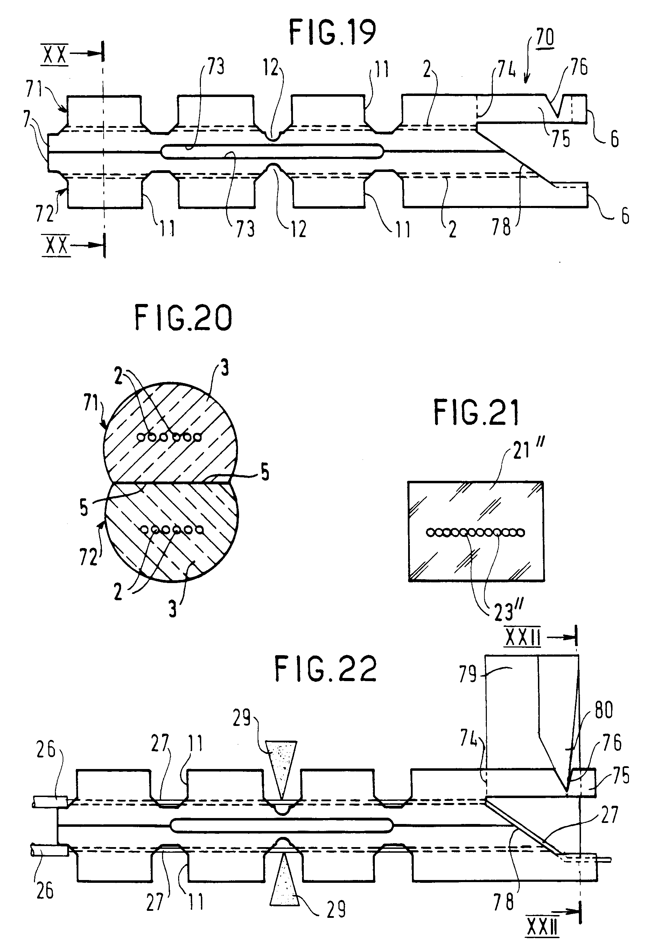

On va à présent s'attacher à décrire un troisième mode de mise en oeuvre du procédé de préparation d'un sous-ensemble de raccordement, ce sous-ensemble étant destiné au raccordement entre deux câbles 22 comportant chacun six fibres optiques gainées 24, et un dispositif d'optique intégrée 21'' comportant douze guides d'ondes 23'' (voir figure 21), de diamètre toujours égal à 125 µm, et équidistants avec un espacement de 125 µm.

On voit aux figures 19 et 20 une multiferrule 70 constituée de l'assemblage de deux multiferrules dites primaires 71 et 72.

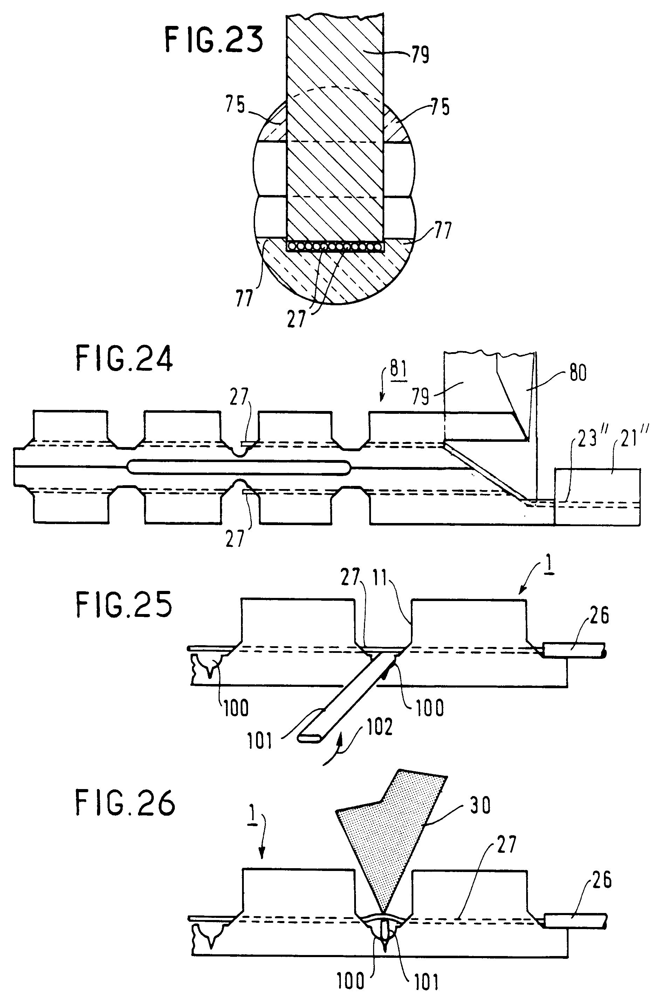

Les multiferrules 71 et 72 sont semblables à la multiferrule 1 à l'exception des caractéristiques suivantes :
- la face 5 des multiferrules 71 et 72 présente une gorge 73 de sorte que la multiferrule 70 obtenue par assemblage des multiferrules 71 et 72 avec leurs faces 5 l'une contre l'autre présente une partie évidée destinée à faciliter son tronçonnage ultérieur,
- seules trois rainures 11 sont pratiquées dans chacune des multiferrules 71 et 72,
- au voisinage de la face 6 de la multiferrule 71, une partie de cette dernière a été retirée de sorte que les canaux 2 débouchent sur l'extérieur au niveau d'une section 74 se trouvant en retrait par rapport à la face 6 de la multiferrule 72 dans la multiferrule 70 ; la section 74 est située entre deux bras en porte-à-faux 75 (voir figure 23) qui se prolongent horizontalement jusqu'au niveau de la face 6 de la multiferrule 72, et dans lesquels sont pratiqués, pour créer des amorces de rupture facilitant le tronçonnage ultérieur de la multiferrule 70, des rainures 76 en forme de vés orthogonales au plan des canaux 2 de la multiferrule 71 (un seul des vés 76 est visibles en figure 19),
- les canaux 2 de la multiferrule 72 débouchent au voisinage de la face 6 dans une fente 77 (voir figure 23) parallèle à leur plan et dont le fond prolonge celui des canaux 2 ; une partie de la multiferrule 72 a été retirée de sorte que la fente 77 s'ouvre vers la multiferrule 71,
- la multiferrule 70 est usinée au voisinage des faces 6 des multiferrules 71 et 72 de sorte que la section 74 est reliée à la fente 77 par un pan incliné 78.

De même que pour le deuxième mode de mise en oeuvre de l'invention, la réalisation de la multiferrule 70 est aisée à l'aide du procédé décrit dans la demande de brevet EP-A-484 850.

La fente 77 a une largeur dans le plan des canaux 2 égale à la somme des diamètres des fibres 27.

Le procédé de préparation du sous-ensemble de raccordement du troisième mode de mise en oeuvre de l'invention va être décrit ci-dessous dans ses opérations qui diffèrent de celles du procédé de préparation du sous-ensemble de raccordement du premier mode de mise en oeuvre de l'invention.

On utilise deux câbles intermédiaires 26 (voir figure 22), ayant chacun six fibres 27 et identiques aux câbles 22. Les fibres 27 dénudées de chacun des câbles 26 sont introduites, par les faces 7, dans les canaux 2 de chacune des multiferrules 71 et 72, de la même manière que les fibres 27 du câble intermédiaire 26 dans les canaux 2 de la multiferrule 1. Les fibres 27 introduites dans les canaux 2 de la multiferrule 71 dépassent au-delà de la section 74 et sont légèrement plus longues que les fibres 27 introduites dans les canaux 2 de la multiferrule 72.

Avant d'immobiliser les fibres 27 dans les canaux 2, une pièce 79 en verre de silice, dont la surface extérieure est complémentaire des portions retirées de la multiferrule 70 au niveau des bras 75 et du pan incliné 78, est appliquée contre les fibres 27 dépassant au-delà des canaux 2 de la multiferrule 71 de sorte que ces dernières sont rabattues contre le pan incliné 78 et viennent se loger dans la fente 77 en s'intercalant avec les fibres 27 déjà présentes dans la multiferrule 72.

Du fait de la largeur de la fente 77, toutes les fibres 27 se trouvent côte à côte dans cette dernière, suivant une disposition identique à celle des guides d'ondes 23'' dans le dispositif d'optique intégrée 21''.

La pièce 79 présente un vé 80 qui vient dans le prolongement des vés 76 de la multiferrule 71 et qui est plus profond que ces derniers. Le vé 80 est destiné à faciliter la découpe ultérieure de la multiferrule 70 au niveau de la pièce 79.

Après avoir immobilisé les fibres 27 dans la fente 77 et dans les canaux 2, et la pièce 79 dans la multiferrule 70, on découpe l'ensemble au niveau des vés 76 et 80, et l'on raccorde le dispositif 21'' à l'extrémité des douze fibres 27 sectionnées.

On peut alors découper les fibres 27 transversalement au niveau des gorges 12 à l'aide de couteaux 29 et retirer les portions de fibres découpées et non immobilisées.

On obtient enfin un sous-ensemble de raccordement 81 (voir figure 24) prêt à être utilisé pour le raccordement du dispositif 21'' à deux câbles 22 introduits par la face 7 des multiferrules 71 et 72.

L'invention permet donc de raccorder n'importe quel dispositif d'optique intégrée à un câble à fibres optiques en utilisant la multiferrule adéquate. Si la préparation en usine diffère selon la disposition des guides d'ondes dans le dispositif d'optique intégrée, le procédé mis en oeuvre sur le chantier est toujours le même. L'invention permet ainsi d'effectuer un gain de temps sur le chantier. De plus, le raccordement sur chantier est moins complexe à effectuer que dans l'art antérieur et peut donc être réalisé par un personnel peu qualifié pour un coût réduit.

Un perfectionnement des multiferrules entrant dans la mise en oeuvre de l'invention est représenté, aux figures 25 et 26, plus particulièrement pour la multiferrule 1, mais peut être appliqué à n'importe quelle multiferrule utilisée dans l'un des procédés de l'invention.

Pour faciliter la découpe des fibres 27 par exemple, et de la multiferrule 1 au niveau d'une même section, on peut pratiquer dans le multiferrule, au niveau de la rainure 11 où sera effectuée la découpe, une gorge 100 communiquant avec la rainure 11 et située en-dessous du plan diamétral des canaux 2.

La découpe se produit alors en deux temps. Dans un premier temps, on glisse dans la gorge 100 un barreau 101 de section elliptique de sorte que son grand axe soit parallèle au plan des canaux 2. On fait ensuite tourner le barreau 101 d'une quart de tour dans le sens de la flèche 102 pour que son petit axe soit parallèle au plan des canaux 2. Ceci a pour effet de courber les fibres 27 (voir figure 26), ce qui, de manière bien connue, améliore la qualité de leur coupe par le couteau 30, en produisant une section de coupe très plane.

Dans un deuxième temps, une fois les fibres 27 sectionnées, on vient découper la multiferrule 1 dans le prolongement de la gorge 100. Il n'est plus nécessaire dans ce cas d'utiliser des rainures supplémentaires telles que les vés 13.

Ce perfectionnement permet non seulement de faciliter la découpe des fibres et de la multiferrule au niveau d'une même section en la décomposant en deux opérations, mais également d'améliorer la qualité optique de la coupe des fibres. Il peut être également appliqué à la découpe des fibres 27 au niveau de la gorge 12.

Bien évidemment, l'invention n'est pas limitée aux modes de mise en oeuvre qui viennent d'être décrits.

En particulier, l'opération de découpe des fibres 27 au niveau de la gorge 12 peut être effectuée, après immobilisation des fibres 27, à n'importe quel moment avant le raccordement du ou des câbles principaux.

D'autre part, la pièce 68 servant au rapprochement des fibres dans le deuxième mode de préparation du sous-ensemble de raccordement peut ne pas être parallélépipédique, mais avoir la forme d'un coin à bords non parallèles, dont la section diminue progressivement à l'intérieur de la fente 62. Dans ce cas, il faudra prendre garde à découper la multiferrule 60 au niveau d'une section où les fibres 27 sont dans une disposition identique à celle des guides d'ondes 23'.

On peut par ailleurs, dans le deuxième mode de mise en oeuvre, utiliser deux pièces de rapprochement venant se loger dans la fente 62 de part et d'autre des fibres 27 afin de centrer les fibres 27 dans la fente 62.

Les pièces 68 et 79 sont de préférence constituées du même matériau que la multiferrule pour plusieurs raisons :
- ce matériau est transparent, ce qui permet l'utilisation d'une colle polymérisable aux ultra-violets,
- cela permet d'obtenir une bonne adhérence entre les pièces 68 ou 79 et les multiferrules 60 ou 70 respectivement.

En outre, l'utilisation d'un matériau vitreux pour les pièces 68 et 79 facilite les opérations de découpe de ces dernières.

On peut cependant choisir de réaliser les pièces 68 et 79 dans d'autres matériaux qui présentent les caractéristiques précédentes mais sont différents de celui de la multiferrule.

Enfin, on pourra remplacer tout moyen par un moyen équivalent sans sortir du cadre de l'invention.

## Revendications

**1/** Procédé de préparation d'un sous-ensemble destiné au raccordement par épissurage d'un dispositif d'optique intégrée à au moins un câble à fibres optiques, dit câble principal, caractérisé en ce que :
- on utilise une multiferrule en un matériau vitreux présentant une série de canaux internes (2) à axes parallèles débouchant sur deux de ses faces opposées (6, 7) appelées première et deuxième faces,
- on utilise un câble à fibres optiques dit câble intermédiaire, comportant autant de fibres (27), dites intermédiaires, que ledit câble principal,
- on introduit, par ladite première face (6), les extrémités dénudées de chacune desdites fibres intermédiaires (27) dans l'un desdits canaux (2) de sorte que lesdites extrémités parviennent jusqu'au voisinage de ladite deuxième face (7),
- on immobilise lesdites fibres intermédiaires (27) dans lesdits canaux (2) sur une longueur inférieure à celle desdits canaux (2) de sorte qu'une portion desdites fibres se trouvant au voisinage de ladite deuxième face (7) n'est pas immobilisée dans lesdits canaux (2),
- on découpe ladite multiferrule et lesdites fibres intermédiaires (27) transversalement auxdites fibres intermédiaires (27) au niveau d'une section dans laquelle lesdites fibres sont immobilisées, pour obtenir un premier tronçon de multiferrule (34) dans lequel lesdites fibres sont en partie immobilisées et comprenant ladite deuxième face (7), et un deuxième tronçon, qui comprend ladite première face (6) et qui est éliminé,
- on raccorde ledit premier tronçon (34) à l'une des faces dudit dispositif d'optique intégrée (21) de manière à placer les extrémités desdites fibres sectionnées et affleurant à la face dudit premier tronçon (34) opposée à ladite deuxième face (7), dans le prolongement des guides d'ondes (23) dudit dispositif d'optique intégrée,
- on découpe lesdites fibres (27) transversalement au niveau d'une section située à proximité de ladite deuxième face (7) et où lesdites fibres ne sont pas immobilisées dans lesdits canaux (2), et l'on élimine les fibres ainsi découpées de manière à laisser lesdits canaux (2) vides sur une partie de leur longueur, pour obtenir ainsi ledit sous-ensemble de raccordement (36).

**2/** Procédé selon la revendication 1 caractérisé en ce que lesdits guides d'ondes (23) dudit dispositif d'optique intégrée (21) sont disposés de sorte que leurs axes se trouvent dans un même plan, l'espacement entre deux guides d'ondes (23) consécutifs dans ce plan étant le même pour tous les guides d'ondes et égal au diamètre desdites fibres intermédiaires (27) non dénudées, et le diamètre desdits guides d'ondes (23) étant sensiblement égal au diamètre desdites fibres intermédiaires (27) dénudées.

**3/** Procédé de préparation d'un sous-ensemble destiné au raccordement par épissurage d'un dispositif d'optique intégrée à au moins un câble à fibres optiques, dit câble principal, caractérisé en ce que :
- on utilise une multiferrule (60) en un matériau vitreux présentant une série de canaux internes (2) à axes parallèles se trouvant dans un même plan, dit plan diamétral, débouchant sur deux de ses faces opposées appelées première (6) et deuxième (7) faces, ladite multiferrule (60) présentant une fente (62) parallèle au plan desdits canaux (2) et telle que ces derniers débouchent dans ladite fente (62),
- on utilise un câble à fibres optiques (26) dit câble intermédiaire, comportant autant de fibres (27), dites intermédiaires, que ledit câble principal,
- on introduit, par ladite deuxième face (7), les extrémités dénudées de chacune desdites fibres intermédiaires (27) dans l'un desdits canaux (2) de sorte que lesdites extrémités parviennent jusqu'au voisinage de ladite première face (6),
- on exerce sur lesdites fibres intermédiaires (27) une force (65) orthogonale au plan des canaux (2) pour amener leurs portions extrêmes situées à proximité de ladite première face (6) dans ladite fente (62) et au contact de l'un des bords (67) de ladite fente (62) parallèle au plan des canaux,
- on introduit par ladite première face (6), dans ladite fente (62), au moins une pièce (68) pour rapprocher lesdites portions extrêmes les unes des autres de sorte que, au niveau d'une section voisine de ladite première face (6), lesdites fibres intermédiaires (27) sont en contact les unes avec autres,
- on immobilise ladite pièce (68) dans ladite mutiferrule (60) et lesdites fibres intermédiaires (27) dans lesdits canaux (2) sur une longueur inférieure à celle desdits canaux (2) de sorte qu'une portion desdites fibres (27) se trouvant au voisinage de ladite deuxième face (7) n'est pas immobilisée dans lesdits canaux (2),
- on découpe ladite pièce (68), ladite multiferrule (60) et lesdites fibres intermédiaires (27) transversalement auxdites fibres intermédiaires (27) au niveau d'une section dans laquelle lesdites fibres (27) sont immobilisées et en contact les unes avec les autres, pour obtenir un premier tronçon de multiferrule dans lequel lesdites fibres sont en partie immobilisées et comprenant ladite deuxième face (7), et un deuxième tronçon, qui comprend ladite première face (6) et qui est éliminé,
- on raccorde ledit premier tronçon à l'une des faces dudit dispositif d'optique intégrée (21') de manière à placer les extrémités desdites fibres sectionnées et affleurant à la face dudit tronçon opposée à ladite deuxième face (7), dans le prolongement des guides d'ondes (23') dudit dispositif d'optique intégrée (21'),
- on découpe lesdites fibres (27) transversalement au niveau d'une section située à proximité de ladite deuxième face (7) et où lesdites fibres (27) ne sont pas immobilisées dans lesdits canaux (2), et l'on élimine les fibres ainsi découpées de manière à laisser lesdits canaux (2) vides sur une partie de leur longueur (60), pour obtenir ainsi ledit sous-ensemble de raccordement.

**4/** Procédé selon la revendication 3 caractérisé en ce que l'on exerce ladite force (65) sur lesdites fibres intermédiaires (27) à l'aide d'au moins un barreau (66) venant se loger dans une rainure (61) orthogonale au plan desdits canaux (2) et dont le fond débouche dans lesdits canaux (2), ladite rainure (61) se trouvant du côté du plan desdits canaux (2) opposé à celui où se trouve le bord (67) de ladite fente (62) contre lequel on doit amener lesdites portions extrêmes.

**5/** Procédé selon l'une des revendications 3 ou 4 caractérisé en ce que l'on maintient lesdites fibres intermédiaires à l'aide d'au moins un barreau cylindrique (63) venant se loger dans une rainure (11) orthogonale au plan desdits canaux (2) et dont le fond débouche dans lesdits canaux (2), ladite rainure (11) se trouvant du même côté du plan desdits canaux (2) que celui où se trouve le bord (67) de ladite fente (62) contre lequel on doit amener lesdites portions extrêmes.

**6/** Procédé selon l'une des revendications 3 à 5 caractérisé en ce que l'on utilise deux pièces introduites dans ladite fente (62) de part et d'autre desdites fibres intermédiaires (27) de manière à centrer ces dernières dans ladite fente (62).

**7/** Procédé selon l'une des revendications 3 à 6 caractérisé en ce que la ou lesdites pièces (68) sont en un matériau vitreux identique à celui de ladite multiferrule (60).

**8/** Procédé selon l'une des revendications 3 à 7 caractérisé en ce que lesdits guides d'ondes (23') dudit dispositif d'optique intégrée (21') sont disposés de sorte que leurs axes se trouvent dans un même plan, l'espacement entre deux guides d'ondes consécutifs (21') dans ce plan étant le même pour tous les guides d'ondes et égal au diamètre desdites fibres intermédiaires (27) dénudées, et le diamètre desdits guides d'ondes (21') étant sensiblement égal au diamètre desdites fibres intermédiaires (27) dénudées.

**9/** Procédé de préparation d'un sous-ensemble destiné au raccordement par épissurage d'un dispositif d'optique intégrée à au moins deux câbles à fibres optiques, dit câbles principaux, caractérisé en ce que :
- on utilise une multiferrule (70) en un matériau vitreux présentant deux séries de canaux internes (2) à axes parallèles situés dans deux plans parallèles et distincts, lesdits canaux (2) débouchant sur deux faces opposées de ladite multiferrule (70) appelées première (6) et deuxième (7) faces, ladite multiferrule (70) étant en outre formée par assemblage de deux multiferrules (71, 72) dites primaires présentant chacune l'une desdites séries de canaux, l'une desdites multiferrules primaires (71) étant moins longue que l'autre (72) de sorte que ladite première face (6) au niveau de ladite première série est en retrait par rapport à ladite première face (6) au niveau de ladite deuxième série, les canaux (2) de ladite deuxième série débouchant par ailleurs au voisinage de ladite première face (6) dans une fente parallèle à leur plan, de largeur égale à la somme des diamètres de tous les canaux (2), et s'ouvrant vers ladite deuxième série, la portion de multiferrule (70) se trouvant entre lesdites première et deuxième séries formant un pan incliné (78) par rapport aux plans desdites première et deuxième séries,
- on utilise deux câbles (26), dits câbles intermédiaires, comportant chacun autant de fibres (27), dites intermédiaires, que l'un desdits câbles principaux,
- on introduit, par ladite deuxième face (7), les extrémités dénudées de chacune desdites fibres intermédiaires (27) dans l'un desdits canaux (2) de sorte que lesdites extrémités parviennent jusqu'au voisinage de ladite première face (6) et que les fibres intermédiaires (27) de chacun desdits câbles intermédiaires se trouvent respectivement dans les canaux (2) de l'une et l'autre desdites séries,
- on applique à l'aide d'une pièce adaptée (79) lesdites fibres intermédiaires (27) de ladite première série contre ledit pan incliné (78) pour amener leurs extrémités dans le plan desdites fibres intermédiaires (27) de ladite deuxième série en les intercalant avec ces dernières dans ladite fente de sorte que lesdites fibres intermédiaires (27) se trouvent toutes en contact les unes avec les autres,
- on immobilise lesdites fibres intermédiaires (27) dans lesdits canaux (2) sur une longueur inférieure à celle desdits canaux (2) de sorte qu'une portion desdites fibres se trouvant au voisinage de ladite deuxième face (7) n'est pas immobilisée dans lesdits canaux (2),
- on découpe ladite multiferrule (70), ladite pièce (79) et lesdites fibres intermédiaires (27) transversalement auxdites fibres intermédiaires au niveau d'une section dans laquelle lesdites fibres sont immobilisées et toutes en contact les unes avec les autres, pour obtenir un premier tronçon de multiferrule dans lequel lesdites fibres (27) sont en partie immobilisées et comprenant ladite deuxième face (7), et un deuxième tronçon, qui comprend ladite première face (6) et qui est éliminé,
- on raccorde ledit premier tronçon à l'une des faces dudit dispositif d'optique intégrée (23'') de manière à placer les extrémités desdites fibres sectionnées et affleurant à la face dudit tronçon opposée à ladite deuxième face, dans le prolongement des guides d'ondes (21'') dudit dispositif d'optique intégrée,
- on découpe lesdites fibres transversalement au niveau d'une section située à proximité de ladite deuxième face et où lesdites fibres ne sont pas immobilisées dans lesdits canaux, et l'on élimine les fibres ainsi découpées de manière à laisser lesdits canaux desdites première et deuxième séries vides jusqu'à une partie centrale de ladite multiferrule (70), pour obtenir ainsi ledit sous-ensemble de raccordement.

**10/** Procédé selon la revendication 9 caractérisé en ce que ladite pièce (79) est en un matériau vitreux identique à celui de ladite multiferrule.

**11/** Procédé selon l'une des revendications 9 ou 10 caractérisé en ce que lesdits guides d'ondes (21'') dudit dispositif d'optique intégrée (23'') sont en nombre égal à celui desdites fibres intermédiaires (27) des deux câbles intermédiaires (26) et sont disposés de sorte que leurs axes se trouvent dans un même plan, l'espacement entre deux guides d'ondes consécutifs dans ce plan étant le même pour tous les guides d'ondes et égal au diamètre desdites fibres intermédiaires dénudées, et le diamètre desdits guides d'ondes étant sensiblement égal au diamètre desdites fibres intermédiaires dénudées.

**12/** Procédé selon l'une des revendications 1 à 11 caractérisé en ce que ledit dispositif d'optique intégrée (21, 21', 23'') est raccordé au niveau de son autre face sur laquelle débouchent lesdits guides d'ondes à un ou plusieurs autres câbles à fibres optiques intermédiaires (26) selon un procédé identique à celui utilisé pour le raccordement du ou des premiers câbles à fibres optiques intermédiaires audit dispositif d'optique intégrée, et ledit sous-ensemble comporte alors ledit dispositif d'optique intégrée (21, 21', 23'') raccordé de part et d'autre à des câbles intermédiaires (26) au moyen de deux multiferrules.

**13/** Procédé de raccordement d'un sous-ensemble selon l'une des revendications 1 à 12 à au moins un câble à fibres optiques dit câble principal, caractérisé en ce que :
- on introduit, par ladite deuxième face (7) dudit sous-ensemble (36), les extrémités dénudées de chacune desdites fibres (24), dites principales, dudit câble principal (22) dans l'un desdits canaux (2) de sorte que lesdites extrémités parviennent jusqu'aux dites fibres intermédiaires (27),
- on immobilise (38) lesdites fibres principales (24) dans lesdits canaux (2),
- on découpe ladite multiferrule (1) et lesdites fibres principales (24) d'une part, et ladite multiferrule (1) et lesdites fibres intermédiaires (27) d'autre part, transversalement auxdites fibres au niveau de deux sections (43, 44) dans lesquelles lesdites fibres sont immobilisées pour obtenir deux tronçons de multiferrule (45, 46) solidarisés respectivement audit câble principal (22) et audit dispositif d'optique intégrée (21), et un tronçon intermédiaire (47) qui est éliminé,
- on aligne lesdits deux tronçons de multiferrule (45, 46) dans un corps d'épissure (50) par guidage de faces de référence extérieures (3) desdits tronçons, et, avant de réaliser le contact, on injecte dans ledit corps un gel (53) servant à l'adaptation des indices de réfraction au niveau des interfaces desdites fibres.

**14/** Procédé selon l'une des revendications 1 à 13 caractérisé en ce que l'on utilise, pour immobiliser les fibres dans ladite multiferrule, une colle polymérisable aux ultra-violets introduite dans lesdits canaux préalablement à l'introduction desdites fibres.

**15/** Procédé selon l'une des revendications 1 à 14 caractérisé en ce que la découpe de ladite multiferrule (1) en tronçons est facilitée par des amorces de rupture (13) prévues transversalement auxdits canaux (2).

**16/** Procédé selon l'une des revendications 1 à 15 caractérisé en ce que l'on prévoit des rainures (11), dites de découpe, parallèles entre elles, orthogonales au plan desdits canaux, et débouchant dans lesdits canaux (2) pour la découpe desdits tronçons.

**17/** Procédé selon la revendication 16 caractérisé en ce que l'on prévoit, au droit desdites rainures de découpe (11) et sur la face opposée de ladite multiferrule (1), des rainures supplémentaires (13) pour créer des amorces de rupture.

**18/** Procédé selon la revendication 17 caractérisé en ce que lesdites rainures supplémentaires (13) ont la forme d'un vé dissymétrique.

**19/** Procédé selon l'une des revendications 1 à 18 caractérisé en ce que ladite deuxième face (7) dudit sous-ensemble (36) présente une surface d'appui (9) pour les gaines en matériau isolant desdits câbles principaux (22).

**20/** Procédé selon l'une des revendications 1 à 19 caractérisé en ce que les extrémités desdits canaux (2) sont munies d'un chanfrein (10) facilitant l'introduction des fibres.

**21/** Procédé selon l'une des revendications 1 à 20 caractérisé en ce que, pour couper lesdites fibres intermédiaires (27) avant de les éliminer afin de laisser lesdits canaux (2) vides jusqu'à une partie centrale de ladite multiferrule (1), on pratique dans cette dernière au droit de la section de découpe une gorge (12) orthogonale au plan desdits canaux (2) et débouchant dans lesdits canaux.

**22/** Procédé selon l'une des revendications 1 à 21 caractérisé en ce que, pour découper au niveau d'une même section ladite multiferrule (1) et lesdites fibres (27), on commence par découper lesdites fibres (27) en leur appliquant (101) une courbure, puis une fois lesdites fibres (27) coupées, on coupe ladite multiferrule (1).

**23/** Sous-ensemble destiné au raccordement par épissurage d'un dispositif d'optique intégrée à au moins un câble à fibres optiques, caractérisé en ce qu'il comporte :
- un tronçon de multiferrule en un matériau vitreux présentant une série de canaux internes à axes parallèles débouchant sur deux faces opposées dudit tronçon,
- des fibres optiques dénudées introduites dans lesdits canaux, affleurant à l'une des faces dudit tronçon et immobilisées dans lesdits canaux sur une partie de leur longueur depuis ladite face à laquelle elles affleurent, lesdits canaux étant vides au voisinage de l'autre face dudit tronçon et sur une partie de leur longueur,
- un dispositif d'optique intégrée raccordé à ladite face dudit tronçon à laquelle affleurent lesdites fibres optiques, de sorte que les guides d'ondes dudit dispositif d'optique intégrée sont dans le prolongement desdites fibres optiques.

**24/** Sous-ensemble destiné au raccordement par épissurage d'un dispositif d'optique intégrée à au moins un câble à fibres optiques, caractérisé en ce qu'il comporte :
- un tronçon de multiferrule en un matériau vitreux présentant une série de canaux internes à axes parallèles se trouvant dans un même plan et débouchant sur deux faces opposées dudit tronçon, ainsi qu'une fente parallèle au plan des canaux et telle que ces derniers débouchent dans ladite fente,
- des fibres optiques dénudées introduites dans lesdits canaux, affleurant à la face dudit tronçon au niveau de laquelle débouche ladite fente, lesdites fibres étant en contact, au niveau de leur extrémité, avec l'un des bords de ladite fente parallèle au plan desdits canaux, et rapprochées les unes des autres à leur extrémité de manière à être en contact les unes avec les autres au voisinage de ladite face à laquelle elles affleurent, lesdites fibres étant en outre immobilisées dans lesdits canaux sur une partie de leur longueur depuis ladite face à laquelle elles affleurent, lesdits canaux étant vides au voisinage de l'autre face dudit tronçon et sur une partie de leur longueur,
- un dispositif d'optique intégrée raccordé à ladite face dudit tronçon à laquelle affleurent lesdites fibres optiques, de sorte que les guides d'ondes dudit dispositif d'optique intégrée sont dans le prolongement desdites fibres optiques.

**25/** Sous-ensemble destiné au raccordement par épissurage d'un dispositif d'optique intégrée à au moins deux câbles à fibres optiques, caractérisé en ce qu'il comporte :
- un tronçon de multiferrule en un matériau vitreux présentant deux séries de canaux internes à axes parallèles, situés dans deux plans parallèles et distincts et débouchant sur deux faces opposées dudit tronçon, ledit tronçon étant formé d'un assemblage de deux tronçons de multiferrules, dits primaires, comportant chacun l'une desdites séries de canaux, l'un desdits tronçons primaires étant moins long que l'autre, les canaux du tronçon primaire le plus long débouchant par ailleurs au voisinage de l'une des faces dudit tronçon dans une fente parallèle à leur plan, de largeur égale à la somme des diamètres de tous les canaux de ce tronçon primaire, et s'ouvrant vers l'autre série de canaux, la portion de tronçon se trouvant entre lesdites deux séries formant un pan incliné parallèle aux plans desdites deux séries,
- des fibres optiques dénudées introduites dans lesdits canaux de l'une et l'autre desdites séries, les fibres optiques introduites dans les canaux du tronçon primaire le moins long étant appliquées à l'aide d'une pièce adaptée contre ledit pan incliné de sorte que leurs extémités se trouvent dans le plan des fibres optiques de l'autre série de canaux, et qu'elles sont intercalées avec ces dernières dans ladite fente, les fibres optiques étant ainsi toutes en contact les unes avec les autres et affleurant toutes à l'une des faces dudit tronçon, lesdites fibres étant en outre immobilisées dans lesdits canaux sur une partie de leur longueur depuis ladite face à laquelle elles affleurent toutes, lesdits canaux étant vides au voisinage de l'autre face dudit tronçon et sur une partie de leur longueur jusqu'à une partie centrale dudit tronçon,
- un dispositif d'optique intégrée raccordé à ladite face dudit tronçon à laquelle affleurent lesdites fibres optiques, de sorte que les guides d'ondes dudit dispositif d'optique intégrée sont dans le prolongement desdites fibres optiques.
